Europäisches Patentamt

European Patent Office

Office européen des brevets

(19)

(11) Veröffentlichungsnummer: **0 026 413**
**B1**

# (12) EUROPÄISCHE PATENTSCHRIFT

(45) Veröffentlichungstag der Patentschrift:
**19.10.83**

(21) Anmeldenummer: **80105648.2**

(22) Anmeldetag: **19.09.80**

(51) Int. Cl.³: **H 04 Q 3/00**

(54) Schaltungsanordnung zur Registrierung des Schaltzustandes in einem insbesondere durch Teilnehmeranschlussleitungen von Fernsprechvermittlungsanlagen gebildeten Schaltkreis.

(30) Priorität: **26.09.79 DE 2938981**

(43) Veröffentlichungstag der Anmeldung:
**08.04.81 Patentblatt 81/14**

(45) Bekanntmachung des Hinweises auf die Patenterteilung:
**19.10.83 Patentblatt 83/42**

(84) Benannte Vertragsstaaten:
**AT BE CH DE FR GB IT LI LU NL SE**

(56) Entgegenhaltungen:
**EP-A-0 011 720**
**DE-A-1 762 036**
**DE-A-2 701 836**
**DE-A-2 800 158**
**DE-A-2 812 984**
**DE-B-1 264 525**
**FR-A-2 286 573**
**FR-A-2 365 923**
**US-A-4 007 334**

(73) Patentinhaber: **SIEMENS AKTIENGESELLSCHAFT,
Berlin und München Wittelsbacherplatz 2,
D-8000 München 2 (DE)**

(72) Erfinder: **Lechner, Robert, Dipl.-Ing., Haidfeldstrasse 5,
D-8156 Otterfing (DE)**

## Schaltungsanordnung zur Registrierung des Schaltzustandes in einem insbesondere durch Teilnehmeranschlußleitungen von Fernsprechvermittlungsanlagen gebildeten Schaltkreis

Die Erfindung betrifft eine Schaltungsanordnung zur Ableitung eines Steuersignals, insbesondere zur Bewertung des Betriebszustandes von Teilnehmeranschlußleitungen in Fernsprechvermittlungsanlagen, die unter Einbeziehung der amtsseitigen Speiseschaltung und der Sprechstelle jeweils einen Schaltstromkreis bilden, in den Fällen, in denen ein sich aufgrund einer zu registrierenden Schaltmaßnahme an einem Meßpunkt aus einer Mehrzahl gleichartiger Meßpunkte in jeweils einem solcher Schaltstromkreise sich einstellender Gleichspannungsmeßwert einen vorgegebenen und zwei Meßbereiche trennenden Vergleichsspannungswert durchschreitet, wobei die einzelnen Meßpunkte zyklisch nacheinander durch eine elektronische Selektorschaltung an den einen Eingang eines Komparators, der diese Registrierung durch Abgabe eines sich je nach Durchschreitungsrichtung voneinander sprunghaft unterscheidenden Ausgangssignals ermöglicht, durchgeschaltet werden, an dessen anderem Eingang der Vergleichsspannungswert zugeführt wird, wobei das sich für jeden Meßpunkt ergebende Ausgangssignal des Komparators erst nach einer der Zykluszeit entsprechenden Verzögerungszeit als Steuersignal für die weitere Verarbeitung an nachgeordnete Steuereinheiten übermittelt wird.

Es wird von einer Anordnung ausgegangen, bei der die Spannungszustände einzelner Meßpunkte nacheinander über eine Selektorschaltung, die periodisch wiederkehrend wirksam geschaltet wird, durch einen Komparator feststellbar sind. Ein derartiger Komparator ist demnach gemeinsam für eine der Anzahl der Selektorschritte entsprechende Anzahl von Meßpunkten vorhanden. Geht die Anzahl der Meßpunkte darüber hinaus, so können diese in gleicher Weise durch ein oder mehrere weitere Selektorschaltungen, die jeweils nach einer bestimmten Zykluszeit erneut wirksam sind, abgefragt werden.

Für den Komparator ist ein Vergleichsspannungswert vorgegeben, durch den eine Schwelle bestimmt ist. Dadurch können beispielsweise zwei den möglichen Schaltzuständen in einem Stromkreis zuzuordnende Meßbereiche getrennt werden. Solange der zum jeweiligen Abfragezeitpunkt vorhandene Meßwert innerhalb eines jeden Meßbereiches sich eindeutig von dem vorgegebenen Schwellwert unterscheidet, ist eine einwandfreie Zuordnung des jeweiligen Ausgangssignals des Komparators zu einem dieser Bereiche möglich. Liegt der Meßwert jedoch in unmittelbarer Nähe des vorgegebenen Schwellwertes, so muß sichergestellt sein, daß insbesondere bei geringfügigen Veränderungen des Meßwertes, die beispielsweise durch Störeinflüsse verursacht sein können, eine eindeutige Aussage erfolgt. Das bedeutet, daß eine geringfügige Schwankung um den Schwellwert nach oben oder unten nicht jeweils zu einer Änderung im Ausgangssignal führen sollte. Der zwischen zwei aufeinanderfolgenden Meßzeitpunkten erfolgte Übergang des Meßwertes von einem Meßbereich in den anderen Meßbereich kann durch einen Spannungssprung in der Ausgangsspannung des Komparators definiert sein. Für einen Komparator, der zum Vergleich zweier Spannungswerte herangezogen wird, ist es für sich bekannt, durch eine zusätzliche Mitkopplung in den Pluseingang ein Hystereseverhalten zu erreichen (siehe z. B. DE-B-1 264 525).

Als Schaltstromkreis, dessen Schaltzustand beurteilt werden soll, kann der über die Versorgungsspannungsquelle, die Teilnehmerleitungsschleife und die Sprechstelle gebildete Stromkreis betrachtet werden. Ist für jede Sprechstelle innerhalb der ihr amtsseitig zugeordneten Teilnehmeranschlußschaltung eine Speisung über entsprechende Speisewiderstände, die in jede der beiden Adern eingefügt und an die zentrale Versorgungsspannungsquelle angeschaltet sind, vorgesehen, so kann der beispielsweise nicht unmittelbar mit dem Pluspol der Versorgungsspannung verbundene Anschlußpunkt des Speisewiderstandes als Meßpunkt herangezogen werden.

Es ist die Aufgabe der Erfindung, bei der Anordnung der eingangs genannten Art eine eindeutige Zuordnung des jeweiligen Meßbereiches zum Ausgangssignal des Komparators bei Auftreten eines voranstehend geschilderten Grenzfalles zu ermöglichen. Dies wird dadurch erreicht, daß das Ausgangssignal des Komparators nach der genannten Verzögerungszeit auch jeweils individuell für die ein und demselben Meßpunkt im Zyklus betreffende nachfolgende Spannungsauswertung dem fest vorgegebenen Vergleichsspannungswert über ein entkoppelndes Anpassungsglied derart überlagert wird, daß die Ansprechschwelle (US) nach Art einer Mitkopplung jeweils geringfügig in diejenige Richtung verschoben wird, die bei einer möglichen Überschreitung durch den Meßwert eine gegenteilige Aussage im Ausgangssignal des Komparators ergeben würde.

Erfindungsgemäß wird also in Abhängigkeit von dem bei der vorangegangenen Abfrage ein und desselben Meßpunktes ermittelten Ausgangssignal des Komparators, das einem bestimmten Logikpotential entspricht, für die jeweils anstehende Bewertung gegebenenfalls eine Änderung im maßgebenden Vergleichsspannungswert bewirkt. Hierzu wird das der vorangegangenen Abfrage des gleichen Meßpunktes zuzuordnende Ausgangssignal in entsprechender Weise der Vergleichsspannung überlagert. Dies ist bei der durch die Selektorschaltung jeweils vorgenommenen Anschaltung für eine vorgegebene Anzahl von Meßpunkten in zeitlich richtiger Zuordnung möglich. Es ist somit individuell pro Meßpunkt ein dynamischer Änderungsbereich vorzusehen. Aufgrund der geringfügigen Verschiebung der Vergleichsspannung in diejenige Richtung, die ausgehend von einem Meßwertbereich zu einem den anderen Meßwertbereich charakterisierenden Ansprechen führen würde, kann der Komparator erst dann einen diesem Bereich zugeordneten Ausgangszustand einnehmen, wenn sich seit dem vorhergehenden Abfragezeitpunkt der zu messende Spannungswert wertemäßig um mehr als die vorgenommene Verschiebung geändert hat.

Gemäß einer Weiterbildung der Erfindung wird zur Verzögerung des Ausgangssignals des Komparators dieses jeweils einem Schieberegister eingegeben, dessen Schiebetakt unmittelbar vom jeweiligen Steuertakt für die Selektorschaltung abgeleitet wird. Die Anzahl der Schiebeschritte dieses Schieberegisters entspricht der Anzahl der durch die Selektorschaltung abgefragten Meßpunkte.

Insbesondere bei der Abfrage von Teilnehmeranschlußleitungen ist ein derartiges Schieberegister zur Anpassung an die den Arbeitsabläufen zugrunde liegenden Zeitverhältnisse ohnehin notwendig. Es muß nämlich sichergestellt sein, daß ausschließlich die einem eingeschwungenen Zustand der maßgebenden Bauelemente bzw. Baueinheiten entsprechenden Informationen bewertet werden. Es ist somit eine Mehrfachausnutzung dieses Schieberegisters gegeben.

Gemäß einer Weiterbildung der Erfindung wird der Vergleichsspannungswert über eine feste Teileranordnung vorgegeben, und es wird abhängig von der die vorherige Abfrage betreffenden Ausgangsinformation des Schieberegisters eine Verschiebung des Vergleichsspannungswertes bewirkt. Als Komparator wird erfindungsgemäß ein entsprechend beschalteter integrierter Differenzverstärker, vorzugsweise ein Operationsverstärker, verwendet.

Nachstehend wird die Erfindung unter Bezugnahme auf die Figuren näher erläutert.

Fig. 1 zeigt den grundsätzlichen Schaltungsaufbau für die Bewertung der Potentialverhältnisse an einem Meßpunkt;

Fig. 2 zeigt eine grafische Darstellung zur Erläuterung der Veränderung des Ansprechwertes.

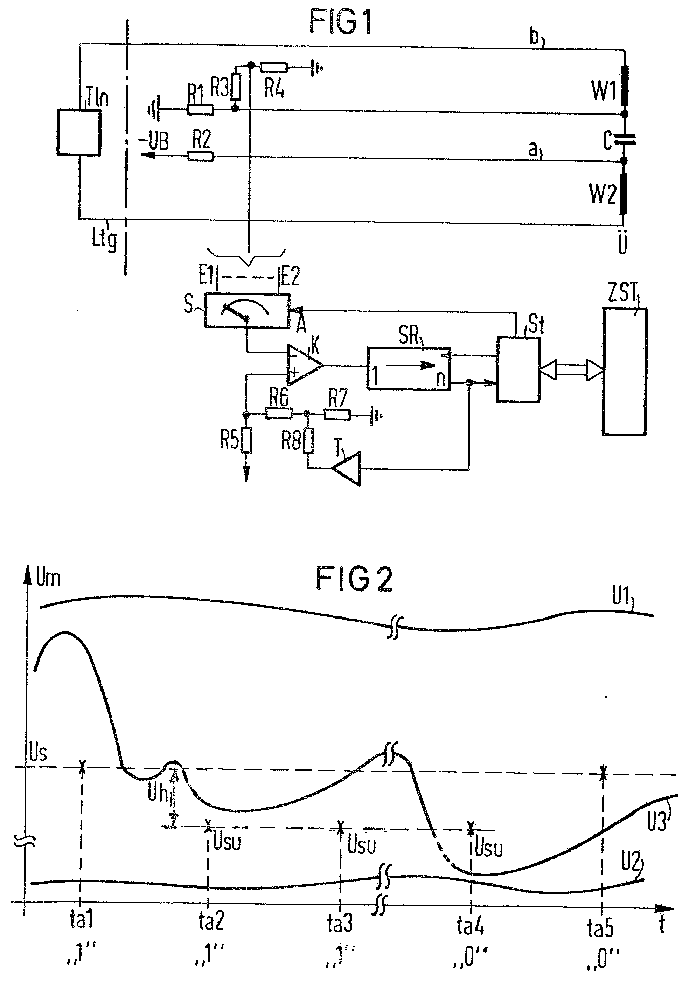

Die Fig. 1 zeigt nur die zum Verständnis der Erfindung notwendigen Bauelemente bzw. Baueinheiten. Zur Abfrage der Potentialzustände an den einzelnen Meßpunkten soll die Selektorschaltung S dienen. Diese Selektorschaltung kann ein handelsüblicher integrierter Multiplexer sein. Durch ihn können eine der Anzahl seiner Eingänge E1 bis En entsprechende Anzahl von Meßpunkten, die jeweils mit einem dieser Eingänge gekoppelt sind, abgefragt werden. Die an den jeweiligen Eingängen anliegenden Informationen werden dann jeweils zum Ausgang durchgeschaltet. Für den einzelnen Eingang erfolgt dies dadurch, daß eine beispielsweise binär codierte Adresse an die Adresseneingänge A der Selektorschaltung angelegt werden. Dies kann sowohl in beliebiger Reihenfolge als auch in der Weise geschehen, daß die einzelnen Eingänge unmittelbar aufeinanderfolgend durch eine entsprechende fortlaufende Adressierung für die Durchschaltung der Eingangsinformation an den Ausgang ausgewählt werden. Im Ausführungsbeispiel wird als Meßpunkt ein Schaltungspunkt herangezogen, der den Potentialzustand einer Teilnehmeranschlußleitung charakterisiert. Die zur Teilnehmerstelle Tln führende Teilnehmeranschlußleitung Ltg ist über die in die jeweilige Ader a bzw. b eingefügten Wicklungen W1 bzw. W2 eines Gabelübertragers Ü mit der Speiseschaltung, die einen Teil der für jeden Teilnehmer amtsseitig vorhandenen Teilnehmeranschlußschaltung bildet, verbunden. Die Speiseschaltung besteht aus den beiden Speisewiderständen R1 und R2. Der Widerstand R1 ist in die an Erdpotential liegende Ader, die b-Ader, und der Widerstand R2 in die am Speisepotential liegende Ader, die a-Ader der Teilnehmeranschlußleitung, eingefügt. Durch den Kondensator C werden die beiden Leitungsadern an den der speisenden Quelle abgewendeten Anschlüssen der beiden Widerstände überbrückt. Die sekundärseitigen Wicklungen des Übertragers Ü, der u. a. die Gleichstromwege der rufenden und der gerufenen Teilnehmerstelle entkoppelt, ist nicht weiter dargestellt. Die übrigen Bestandteile der Teilnehmeranschlußschaltung, wie sie beispielsweise die Schaltmittel zur Rufanschaltung darstellen, sind ebenfalls nicht gezeigt.

Abhängig davon, in welchem Betriebszustand sich die Teilnehmeranschlußleitung befindet, treten nun an den Speisewiderständen, beispielsweise an dem Speisewiderstand R1, unterschiedliche Potentialverhältnisse auf. Dadurch können u. a. das Abheben des Handapparates, Wählimpulse und andere Schaltkennzeichen als Folge ihre Spannungsabfalles an dem Widerstand R1 durch eine entsprechende Spannungsauswertung festgestellt werden. Bei offener Teilnehmerschleife stellen sich an den Leitungsadern Potentiale ein, die durch die Größe der Versorgungsspannung −UB und durch die Ableitwiderstände der Leitung bestimmt sind. Es ist das Potential an der a-Ader annähernd gleich der Versorgungsspannung −UB und das der b-Ader nahezu Null. Wird die Schleife geschlossen, so sinkt die Spannungsdifferenz zwischen den Adern auf einen kleinen, vom Schleifenwiderstand abhängigen Wert, während sich das Potential am Speisewiderstand R1 auf einen durch den Widerstandswert und den Schleifenstrom bestimmten Spannungsabfall ändert. Es kann also durch eine entsprechende Messung des Spannungsabfalls am Widerstand R1 der Betriebszustand der Teilnehmeranschlußleitung registriert werden. Hierzu ist einer der Eingänge E1 bis En des Selektors mittelbar über einen aus den Widerständen R3 und R4 gebildeten Spannungsteiler mit der Leitungsader verbunden. Durch den Spannungsteiler wird der bei Schleifenschluß am Widerstand R1 auftretende Spannungsabfall auf einen vermittels der integrierten Selektorschaltung S durchschaltbaren Spannungswert gebracht. Es können durch eine handelsübliche, integrierte Selektorschaltung eine Gruppe von n, beispielsweise 16, Teilnehmeranschlußleitungen über die entsprechende Anzahl von Eingängen abgefragt werden. Hierzu sind dann diese Eingänge einzeln mit jeweils einem Teilerpunkt der für jede Teilnehmeranschlußleitung vorhandenen Teilerschaltung verbunden.

Soll der Betriebszustand von mehr als n Leitungen abgefragt werden, so sind in gleicher Weise über entsprechende Selektorschaltungen weitere Leitungsgruppen zusammenzufassen. Die jeweils an einem Eingang E anliegende und den Schaltzustand einer Teilnehmeranschlußleitung definierenden Eingangsspannung wird bei der entsprechenden Auswahl des jeweiligen Eingangs durch die Adresseninformation an den Ausgang durchgeschaltet und dem invertierenden Eingang eines integrierten Komparators K zugeführt. Am Pluseingang dieses Komparators liegt eine Vergleichsspannung, die durch die aus den Widerständen R5 bis R7 bestehende Teilerschaltung aus der Versorgungsspannung abgeleitet wird. Bei der Beurteilung des Schaltzustandes von Teilnehmeranschlußleitungen wird dieser Vergleichsspannungswert so gelegt, daß dadurch bei den zulässigen Leckwiderständen und den vorhandenen Streuungen im Leitungswiderstand eine eindeutige Trennung der dem offenen und geschlossenen Zustand der Teilnehmerleitungsschleife zuzuordnenden Bereiche möglich ist. Es ist denkbar, dem Pluseingang des Komparators zusätzlich eine Spannung zuzuführen, die an dem Verbindungspunkt zweier hochohmiger Widerstände entsteht, die zwischen den Leitungsadern einen Querzweig bilden. Dadurch können sich beispielsweise durch eine Starkstromleitung hervorgerufene Einkopplungen von Störanteilen bestimmter Größenordnung nicht mehr nachteilig auswirken. Diese stimmen dann nämlich an den Ankopplungspunkten und damit an den beiden Eingängen des Komparators K hinsichtlich des Betrages, der Phase und der Frequenz überein, so daß sie bei der durch den Komparator vorgenommenen Differenzbildung eliminiert werden. Die Zuführung dieser weiteren Spannung an den Eingang des Komparators kann dann in gleicher Weise, wie dies für den invertierenden Eingang erfolgt, durch eine weitere gleichartige Selektorschaltung vorgenommen werden.

Je nachdem, ob die über die Selektorschaltung zum jeweiligen Abfragezeitpunkt dem invertierenden Eingang zugeführte Meßspannung oberhalb oder unterhalb der vorgegebenen Vergleichsspannung liegt, entsteht ein sich eindeutig voneinander unterscheidendes Ausgangssignal des Komparators. Dieses jeweilige Ausgangssignal soll dann dem Logikpotential Null bzw. dem Logikpotential Eins entsprechen.

Im Falle der Abfrage von Teilnehmeranschlußleitungen soll beispielsweise das Ausgangssignal, das sich bei einer geschlossenen Leitungsschleife ergibt, dem Logikpotential 1 entsprechen. In diesem Fall liegt der dem Komparator zugeführte Meßspannungswert über dem eingestellten Vergleichsspannungswert. Das Ausgangssignal des Komparators wird in ein nachgeschaltetes Schieberegister SR eingegeben, das eine der Anzahl der über eine Selektorschaltung S abzufragenden Meßpunkte entsprechende Anzahl von Schritten aufweist. Das Schieberegister wird nach der Abfrage eines jeden Meßpunktes innerhalb der Gruppe von jeweils n Meßpunkten über einen entsprechenden Taktimpuls weitergeschaltet. Dieser Taktimpuls kann ebenso wie die Adresseninformation für die Auswahl eines der Eingänge E1 bis En im Falle der Abfrage von Teilnehmeranschlußleitungen durch eine zentrale Steuereinrichtung ZST ausgelöst werden. Setzt man voraus, daß noch weitere Gruppen von Meßpunkten in gleicher Weise über andere Selektorschaltungen zusammengefaßt werden, so schließt sich mit der Abfrage der n-ten Teilnehmerleitung in gleicher Weise die Abfrage der jeweils anderen Gruppen in der durch die zentrale Steuereinrichtung festgelegten Reihenfolge an. Nach Ablauf der vorgesehenen Zykluszeit erfolgt dann die erneute Abfrage ein und desselben Meßpunktes bzw. der diesem Meßpunkt im Ausführungsbeispiel zugeordneten Teilnehmeranschlußleitung. Jeweils nach Ablauf der vorgesehenen Zykluszeit wird also beispielsweise die Selektorschaltung S erneut aktiviert und durch eine entsprechende Adresseninformation von der zentralen Steuereinrichtung die einzelnen Eingänge nacheinander an den einen Eingang des Komparators angeschaltet. Das bedeutet, daß das ein und denselben Meßpunkt betreffende Ausgangssignal um die Zykluszeit verzögert am Ausgang des Schieberegisters erscheint. Dieses Ausgangssignal wird dann über eine Schnittstelle St, die die jeweilige Information in gleicher Wiese wie andere ihr zugeleitete Informationen in entsprechende Logikpotentiale Null und Eins umwandelt, der zentralen Steuereinrichtung mitgeteilt. Diese leitet dann die sich aus dem jeweiligen Ausgangssignal ergebenden Prozeduren ein. Die von dieser zentralen Steuereinrichtung fallweise abgegebenen Steuerinformationen zur Ansteuerung der einzelnen Adresseneingänge und zur Weiterschaltung des Schieberegisters werden über die jeweils zugeordnete Schnittstelle St wirksam weitergegeben.

Das Ausgangssignal des Schieberegisters SR wird weiterhin über einen Trennverstärker T und einen Widerstand R8 an den Verbindungspunkt der beiden Widerstände R6 und R7 zugeführt. Diese Widerstände bilden einen Teilwiderstand der die Vergleichsspannung liefernden Teilerschaltung. Auf diese Weise findet eine Beeinflussung des jeweiligen wirksamen Schwellwertes in Abhängigkeit von dem Ergebnis der unmittelbar vorausgegangenen Abfrage des gleichen Meßpunktes statt. Es wird nämlich bei jeder Abfrage am Ausgang des Schieberegisters der der vorausgegangenen Abfrage entsprechenden Zustand ausgegeben und dadurch gegebenenfalls durch eine entsprechende Spannungsüberlagerung der Bezugswert für das Ansprechen des Komparators K verändert. Diese Veränderung geschieht derart, daß die Ansprechschwelle nach Art einer Mitkopplung jeweils geringfügig in diejenige Richtung verschoben wird, die bei einer möglichen Überschreitung durch den Meßwert eine gegenteilige Aussage im Ausgangssignal des Komparators ergeben würde. Damit wird erreicht, daß bei einer Meßwertspannung, die größenmäßig in unmittelbarer Nähe des vorgegebenen Ansprechschwellwertes liegt, bei geringfügigen, beispielsweise durch Störeinflüsse bedingten Veränderungen der Meßspannung keine Änderung im Ausgangssignal des Komparators auftritt. Dies ist erst dann der Fall, wenn für die Meßwertspannung eine Änderung auftritt, die größer ist als die zum Meßzeitpunkt jeweils vorgenommene Verschiebung der Ansprechschwelle. Bei der Abfrage von Teilnehmeranschlußleitungen wird beispielsweise dadurch sichergestellt, daß in den Fällen, in denen auftretende Leckwiderstände einen annähernd dem vorgegebenen Schwellwert entsprechenden Spannungswert ergeben, keine oszillierenden Aussagen im Ausgangssignal des Komparators erfolgen. Dies gilt dann jeweils für eine Änderung der Meßwertspannung in dem Bereich, der durch die Anpassung des jeweils maßgebenden Schwellwertes definiert wird. Erst darüber hinausgehende Veränderungen haben eine Änderung im Ausgangssignal zur Folge.

Diese Funktionsweise ist durch das Diagramm der Fig. 2 veranschaulicht. Durch die Kurven U1, U2 sind Spannungsverläufe vorgegeben, die eine eindeutige Aussage des Komparators ermöglichen, da sie sich eindeutig vom Ansprechwert unterscheiden. Zu jedem Abtastzeitpunkt ta ist eine eindeutige Aussage gegeben. Die der Kurve U1 entsprechenden Spannungswerte sollen im Falle iner Leitungsüberwachung beispielsweise den bei einer geschlossenen Leitungsschleife auftretenden Werten entsprechen. Dies soll dann beispielsweise ein Ausgangssignal des Komparators K zur Folge haben, das dem Logikpotential 1 entspricht. Die der Kurve U2 zu den jeweiligen Abtastpunkten ta entsprechenden Meßwerte sollen sich bei einer offenen Leitungsschleife am Meßwiderstand ergeben. Das hat eine gegenüber den Meßpunkten entsprechend der Kurve U1 gegenteiliges Ausgangssignal des Komparators zur Folge. Dieses Ausgangssignal soll dann definitionsgemäß dem Logikpotential Null entsprechen.

Die Kurve U3 zeigt einen Spannungsverlauf für den Meßwert, der jeweils in unmittelbarer Nähe des Ansprechwertes Us liegen soll, der durch die aus den Widerständen R5 bis R7 bestehenden Teilerschaltung für den Komparator vorgegeben ist. Würde sich dieser Wert infolge einer Störbeeinflussung in der Weise ändern, daß sein Absolutwert für den einen Abtastzeitpunkt ta1 beispielsweise oberhalb dieses Ansprechwertes und für den unmittelbar darauffolgenden Abtastzeitpunkt ta2 unterhalb des Ansprechwertes liegt, so würden sich aufgrund dieser Störbeeinflussung gegensätzliche Aussagen im Ausgangssignal des Komparators ergeben. Dies wird nun dadurch verhindert, daß abhängig vom Ergebnis der vorausgegangenen Abfrage die Ansprechschwelle für die nachfolgende Abfrage selbsttätig etwas verschoben wird. Unter der Annahme, daß sich für den Abtastzeitpunkt ta1 ein dem Logikpotential Eins entsprechendes Ausgangssignal ergeben hat, wird nun nach Ablauf der Zykluszeit, die demnach der Differenz zwischen den beiden Abfragezeitpunkten ta2 und ta1 entspricht, für die nachfolgende Abfrage die Schwellenspannung um einen gewissen Bereich Uh abgesenkt, so daß sich im angenommenen Beispiel die Schwellspannung Usu ergibt. Zum Meßzeitpunkt ta2 ergibt sich somit keine Veränderung im Ausgangssignal des Komparators. Dies soll in gleicher Weise für weitere sich anschließende Meßzeitpunkte der Fall sein. Diese Änderung, d. h., der Sprung in den entgegengesetzten Schaltzustand, soll erst zum Abtastzeitpunkt ta4 auftreten, da der herabgesetzte Schwellwert durch den Meßwert unterschritten wird. Die Änderung im Ausgangssignal des Komparators hat zur Folge, daß für den nachfolgenden Abfragezeitpunkt ta5 die Schwelle wieder um den Bereich Uh angehoben wird. Wird diese für diesen Abtastzeitpunkt maßgebende Schwelle durch den Meßwert nicht überschritten, so bleibt dieser Schwellwert für die nachfolgenden Abtastzeitpunkte erhalten. Überschreitet die Meßwertspannung diesen Schwellwert erneut, so ergibt sich eine Änderung im Ausgangssignal. Der Meßwert hat sich somit um einen Betrag verändert, der den einen Störbereich definierenden Betrag Uh übersteigt. Dies wird in der Regel nicht durch eine Störbeeinflussung bewirkt werden, sondern es wird das Ergebnis einer Änderung im Schaltzustand einer abgefragten Teilnehmeranschlußleitung sein. Diese Änderung im Schaltzustand wird dann durch eine Änderung im Ausgangssignal des Komparators richtig signalisiert.

**Patentansprüche**

1. Schaltungsanordnung zur Ableitung eines Steuersignals, insbesondere zur Bewertung des Betriebszustandes von Teilnehmeranschlußleitungen (Ltg) in Fernsprechvermittlungsanlagen, die unter Einbeziehung der amtsseitigen Speiseschaltung (−UB, R1, R2) und der Sprechstelle (Tln) einen Schaltstromkreis bilden, in den Fällen in denen ein sich aufgrund einer zu registrierenden Schaltmaßnahme an einem Meßpunkt aus einer Mehrzahl gleichartiger Meßpunkte in jeweils einem solchen Stromkreis sich einstel-

**0 026 413**

lende Gleichspannungsmeßwert einen vorgegebenen und zwei Meßbereiche trennenden Vergleichsspannungswert (Us) durchschreitet, wobei die einzelnen Meßpunkte zyklisch nacheinander durch eine elektronische Selektorschaltung (S) an den einen Eingang eines Komparators (K), der diese Registrierung durch Abgabe eines sich je nach Durchschreitungsrichtung voneinander sprunghaft unterscheidenden Ausgangssignals ermöglicht, durchgeschaltet werden, an dessen anderem Eingang der Vergleichsspannungswert zugeführt wird, und wobei das sich für jeden Meßpunkt ergebende Ausgangssignal des Komparators (K) erst nach einer der Zykluszeit entsprechenden Verzögerungszeit als Steuersignal für die weitere Verarbeitung an nachgeordnete Steuereinheiten (ZST) übermittelt wird, dadurch gekennzeichnet, daß das Ausgangssignal des Komparators (K) nach der genannten Verzögerungszeit auch jeweils individuell für die ein und demselben Meßpunkt im Zyklus betreffende nachfolgende Spannungsauswertung dem fest vorgegebenen Vergleichsspannungswert über ein entkoppelndes Anpassungsglied (T) derart überlagert wird, daß die Ansprechschwelle (US) nach Art einer Mitkopplung jeweils geringfügig in diejenige Richtung verschoben wird, die bei einer möglichen Überschreitung durch den Meßwert eine gegenteilige Aussage im Ausgangssignal des Komparators (K) ergeben würde.

2. Schaltungsanordnung nach Anspruch 1, dadurch gekennzeichnet, daß zur Verzögerung die Komparatorausgangsinformation jeweils einem nachgeschalteten Schieberegister (SR) eingegeben wird, dessen Schiebetakt unmittelbar vom jeweiligen Steuertakt der Selektorschaltung (S) abgeleitet wird und dessen Anzahl von Schiebeschritten der Anzahl der abgefragten Meßpunkte entspricht.

3. Schaltungsanordnung nach Anspruch 1, dadurch gekennzeichnet, daß der Vergleichsspannungswert über eine feste Teileranordnung (R5 bis R7) vorgegeben ist und daß abhängig von der die vorherige Abfrage betreffende Ausgangsinformation des Schieberegisters zum Zeitpunkt der unmittelbar nachfolgenden Abfrage eine Verschiebung des Vergleichsspannungswertes ermöglicht wird.

4. Schaltungsanordnung nach einem der vorhergehenden Ansprüche, dadurch gekennzeichnet, daß als Komparator (K) ein entsprechend beschalteter integrierter Differenzverstärker dient.

## Claims

1. Circuit arrangement for deriving a control signal, in particular for monitoring the operating state of subscriber connection lines (Ltg) in telephone exchange systems, which, incorporating the feed circuit (−UB, R1, R2) at the exchange end and the speech station (Tln), form a switching circuit in those cases in which a measured value of d.c. voltage, appearing form time to time in such a circuit as a result of a logging switching measure at one measuring point of a plurality of similar measuring points, passes through a predetermined voltage comparison value (Us) which separates the two measuring ranges, where by means of an electronic selector circuit (S), the individual measuring points are cyclically consecutively switches through to the one input of a comparator (K) which enables this logging by emitting an output signal nonsequentially distinguished from one another depending on the pass-through direction, to whose other input the voltage comparison value is fed, and where the output signal of the comparator (K), which is produced for each measuring point, is only transmitted to following control units (ZST) as a control signal for the further processing after a delay time which corresponds to the cycle time, characterised in that following the delay time, for the subsequent voltage analysis, which concerns one and the same measuring point in the cycle, the output signal of the comparator (K) is also individually superimposed upon the firmly predetermined voltage comparison value by means of a decoupled adapting element (T) in such manner that, in the manner of positive feedback, the response threshold (US) is slightly displaced in that direction which in the event of possible overshooting by the measured value would result in an opposite statement in the output signal of the comparator (K).

2. Circuit arrangement as claimed in claim 1, characterised in that, for the purpose of delay, the comparator output information is supplied to a following shift register (SR) whose shift clock pulse is directly derived from the respective control clock pulse of the selector circuit (S) and whose number of shifting steps corresponds to the scanned measuring points.

3. Circuit arrangement as claimed in claim 1, characterised in that the voltage comparison value is predetermined by means of a fixed divider arrangement (R5 to R7), and that in dependence upon the output information of the shift register which relates to the previous inquiry, a shift of the voltage comparison value is made possible at the time of the directly following inquiry.

4. Circuit arrangement as claimed in one of the preceding claims, characterised in that an appropriately wired integrated difference amplifier serves as comparator (K).

## Revendications

1. Montage pour dériver un signal de commande, notamment pour évaluer l'état de fonctionnement de lignes d'abonnés (Ltg) dans des installations de téléphonie, qui forment, y compris le circuit d'alimentation (−UB, R1, R2) situé du côté du central et le poste d'abonné (Ltn), un circuit de commutation, dans les cas où une valeur de mesure de tension continue, s'établissant respectivement dans un tel circuit en raison d'une disposition de commutation, devant être enregistrée, au niveau d'un point de mesure faisant partie d'une multiplicité points similaires de mesure, franchit une valeur de tension de comparaison (Us) prédéterminée et séparant deux plages de mesure, les différents points de mesure étant connectés directement, cycliquement les uns après les autres, au moyen d'un circuit sélecteur électronique (S), à une entrée d'un comparateur (A) qui permet cet enregistrement par délivrance de signaux de sortie se différenciant par saut l'un de l'autre selon la direction de franchissement, tandis que la valeur de tension de comparaison est envoyée à l'autre entrée du comparateur, le signal de sortie du comparateur (K) obtenu pour chaque point de mesure n'étant retransmis qu'au bout d'un temps de retard correspondant à la durée du cycle, en tant que signal de commande pour le traitement ultérieur, à des unités de commande (ZST) branchées en aval, caractérisé par le fait que le signal de sortie du compensateur (K) est superposé après ledit temps de retard, également respectivement et individuellement pour l'evaluation suivante de la tension concernant un même point de mesure dans le cycle, à la valeur de tension de comparaison prédéterminée de façon fixe, par l'intermédiaire d'un organe d'adaptation (T) réalisant un découplage, de telle manière que le seuil de réponse (Us) est décalé faiblement, à la façon d'une réaction positive, dans la direction qui fournirait, lors d'un dépassement possible de la part de la valeur de mesure, une indication opposée dans le signal de sortie du comparateur (K).

2. Montage selon la revendication 1, caractérisé en ce que pour le retard, l'information de sortie du comparateur est introduite respectivement dans un registre à décalage (SR) branché en aval et dont la cadence de décalage est dérivée directement de la cadence respective de commande du circuit sélecteur (S) et dont le nombre des pas de décalage correspond au nombre des points de mesure interrogés.

3. Montage selon la revendication 1, caractérisé par le fait que la valeur de la tension de comparaison est prédéterminée par l'intermédiaire d'un dispositif diviseur fixe (R5 à R7) et qu'en fonction de l'information de sortie du registre à décalage, concernant l'interrrogation précédente, un décalage de la valeur de la tension de comparaison est possible à l'instant de l'interrogation immédiatement suivante.

4. Montage selon l'une des revendications précédentes, caractérisé par le fait qu'on utilise comme comparateur (K) un amplificateur différentiel intégré câblé de façon correspondante.

# FIG 1

# FIG 2